# EUROPÄISCHE PATENTSCHRIFT

(11) **EP 1 510 653 B1**
(45) Veröffentlichungstag und Bekanntmachung des Hinweises auf die Patenterteilung: **28.05.2008**
(21) Anmeldenummer: 03023643.4
(22) Anmeldetag: 17.10.2003
(51) Int. Cl.: F01D 5/18, F01D 5/16

(54) **Gekühlte Turbinenschaufel**
Cooled turbine blade
Aube de turbine refroidie

(30) Priorität: 29.07.2003 DE 10334899
(43) Veröffentlichungstag der Anmeldung: 02.03.2005
(73) Patentinhaber: SIEMENS AKTIENGESELLSCHAFT, 80333 München (DE)
(72) Erfinder: Gross, Heinz-Jürgen, Dr., 45478 Mühlheim (DE)

(56) Entgegenhaltungen:
- EP-A- 0 340 149
- EP-A- 1 197 635
- EP-A- 1 217 171
- SU-A1- 565 991
- US-A- 5 403 159
- PATENT ABSTRACTS OF JAPAN Bd. 009, Nr. 111 (M-379), 15. Mai 1985 (1985-05-15) -& JP 59 231102 A (TOSHIBA KK), 25. Dezember 1984 (1984-12-25)

## Beschreibung

Die Erfindung betrifft eine kühlbare Turbinenschaufel gemäß Anspruch 1.

Innengekühlte Turbinenschaufeln, die einen mäanderförmigen Innenbereich (EP 1 022 434 A2) sowie eine Prallkühlung aufweisen, sind bekannt.

Die Prallkühlung im Inneren von Turbinenschaufeln ist ebenfalls bekannt.

Die DE 32 34 906 A1, US-PS 5,857,837, 5,873,695, 5,902,093, 5,462,405, 6,139,269 zeigen eine Turbinenschaufel, deren Anströmkante durch Prallkühlung gekühlt wird.

Die DE 199 63 716 A1, US-PS 4,474,532, 4,753,575 und die 4,767,268 zeigen eine Turbinenschaufel, die einen Hohlraum im Bereich ihrer Schaufelspitze aufweisen.

Die US-PS 6,431,832 zeigt eine Turbinenschaufel, die einen Hohlraum im Bereich ihrer Schaufelspitze aufweist und einen Hohlraum im Bereich ihrer Anströmkante.

Die Effektivität der Kühlung im Bereich der Anströmkante einer Turbinenschaufel ist jedoch nicht ausreichend.

Es ist daher Aufgabe der Erfindung eine Turbinenschaufel aufzuzeigen, bei der die Kühlung der Anströmkante verbessert ist.

Die Aufgabe wird gelöst durch eine Turbinenschaufel gemäss Anspruch 1, bei der die Anströmkante durch Prallkühlung gekühlt wird und bei der eine Kronentasche (Hohlraum im Bereich der Schaufelspitze) vorhanden ist.

In den Unteransprüchen sind weitere vorteilhafte Ausgestaltungen der Turbinenschaufel aufgelistet.
Die in den Unteransprüchen aufgelisteten Maßnahmen können in vorteilhafter Art und Weise miteinander kombiniert werden.

Es zeigen:
- Figur 1: eine Turbinenschaufel,
- Figur 2: einen Querschnitt einer Turbinenschaufel und
- Figur 3: eine Gasturbine, in der die erfindungsgemäß ausgebildete Turbinenschaufel eingesetzt wird.

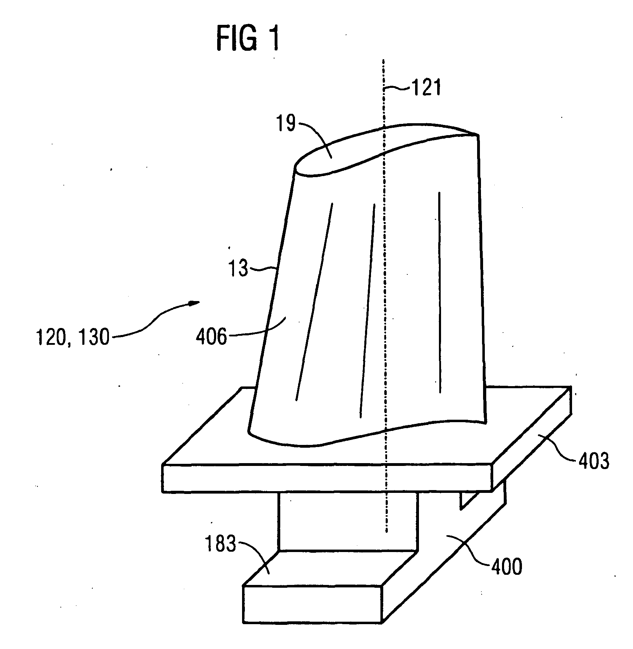

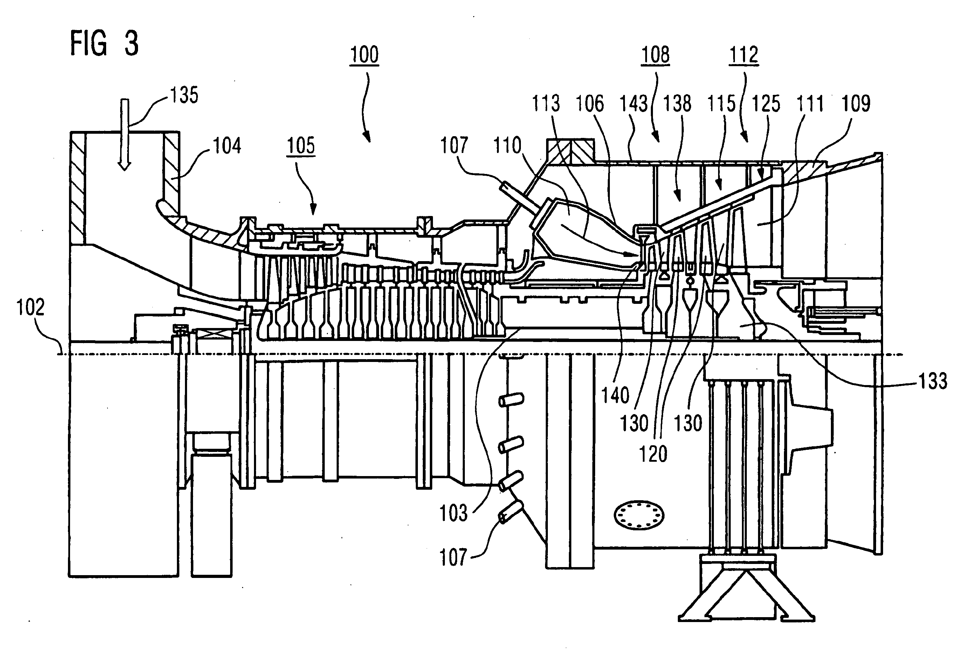

Figur 1 zeigt in perspektivischer Ansicht eine Schaufel 120, 130 (Fig. 3), die sich entlang einer Längsachse 121 (radiale Richtung) erstreckt.
Die Schaufel 120, 130 weist entlang der Längsachse 121 aufeinander folgend einen Befestigungsbereich 400, eine daran angrenzende Schaufelplattform 403, einen Schaufelblattbereich 406 sowie eine Schaufelspitze 19 auf.
Der Schaufelblattbereich 406 wird an einer Anströmkante 13 von einem Medium angeströmt.
Im Befestigungsbereich 400 ist ein Schaufelfuß 183 gebildet, der zur Befestigung der Laufschaufeln 120, 130 an der Welle 103 (Fig. 3) dient. Der Schaufelfuß 183 ist als Hammerkopf ausgestaltet. Andere Ausgestaltungen, beispielsweise als Tannenbaum- oder Schwalbenschwanzfuß sind möglich.
Bei herkömmlichen Schaufeln 120, 130 werden in allen Bereichen 400, 403, 406 der Laufschaufel 120, 130 massive metallische Werkstoffe verwendet.
Die Laufschaufel 120, 130 kann hierbei durch ein Gussverfahren, durch ein Schmiedeverfahren, durch ein Fräsverfahren oder durch Kombinationen daraus gefertigt sein.

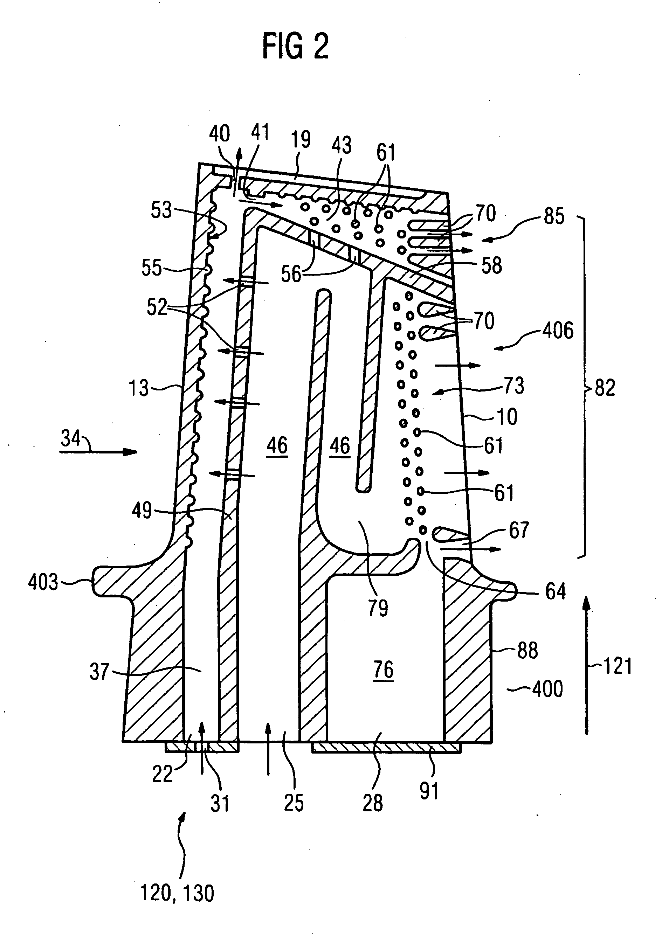

Die Figur 2 zeigt eine solche Turbinenschaufel 120, 130 im Längsschnitt.
In der Figur 2 ist eine Turbinenlauf- 120 oder -leitschaufel 130 einer Gas- (Fig. 3, aber auch Flugzeugturbine) oder Dampfturbine abgebildet.

Die Turbinenschaufel 120, 130 ist zumindest teilweise hohl ausgeführt und wird im Inneren gekühlt.
Die Turbinenschaufel 120, 130 weist im Schaufelfußbereich 400 zumindest einen ersten Kühlmitteleingangsbereich 22, einen zweiten Kühlmitteleingangsbereich 25 und einen dritten Kühlmitteleingangsbereich 28 auf.
Die Kühlmitteleingangsbereiche 22, 25, 28 können wahlweise verschlossen (hier beispielsweise 28) sein oder eine Verengung 31 (hier beispielsweise beim Kühlmitteleingangsbereich 22) aufweisen, mittels der ein Kühlmittelstrom in das Innere eingestellt werden kann. Die Verengung 31 kann auch geregelt werden, d.h. während des Betriebs vergrößert oder verkleinert werden.
In diesem Ausführungsbeispiel ist der dritte Kühlmitteleingangsbereich 28 ganz verschlossen und der erste Kühlmitteleingangsbereich 25 verengt.
Das Kühlmittel strömt durch den ersten und zweiten Kühlmitteleingangsbereich 22, 25 in das Innere der Turbinenschaufel 120, 130.
Die Turbinenschaufel 120, 130 wird in axialer Richtung 34 von einem heißen Medium umströmt. Das heiße Medium trifft in axialer Richtung 34 zuerst auf die Anströmkante 13 (Schaufelnase) und strömt dann an dem Schaufelblatt 406 vorbei bis zur Abströmkante 10.
Das Kühlmittel, das durch den ersten Kühlmitteleingangsbereich 22 in einen Nasenhohlraum 37, der in axialer Richtung 34 direkt hinter der Anströmkante 13 folgt, eindringt, strömt in radialer Richtung 121 bis zur Schaufelspitze 19.
Der Nasenhohlraum 34 verläuft beispielsweise parallel zur Anströmkante 13.

Im Bereich der Schaufelspitze 19 und der Anströmkante 13 ist beispielsweise, aber nicht notwendigerweise, zumindest eine erste Austrittsöffnung 40 für das Kühlmittel vorhanden, so dass dort eine Filmkühlung der Schaufelspitze erfolgen kann. Auf jeden Fall strömt das Kühlmittel durch zumindest eine Verbindungsöffnung 41 in eine Kronentasche 43 (Hohlraum im Bereich der Schaufelspitze 19) und kühlt dort die Schaufelspitze 19 über ihre Länge in axialer Richtung 34.
Die Kronentasche 43 erstreckt sich von dem Nasenhohlraum 43 bis zur Abströmkante 10. Die Ausdehnung der Kronentasche 43 in radialer Richtung 121 verbreitert sich in axialer Richtung 34.
Im Bereich der Abströmkante 10 verlässt dieser Teil des Kühlmittels die Turbinenschaufel 120, 130.

Durch den zweiten Kühlmitteleingangsbereich 25 strömt ebenfalls immer Kühlmittel in einen inneren Hohlraum 46, der sich in axialer Richtung 34 an den Nasenhohlraum 37 anschließt. Der innere Hohlraum 46 ist beispielsweise zumindest teilweise, insbesondere ganz mäanderförmig ausgebildet, so dass ein Teil des Kühlmittels mäanderförmig im Inneren der Turbinenschaufel 120, 130 hin zum Bereich der Abströmkante 10 strömt und zumindest teilweise über die Länge der Abströmkante 10 aus der Turbinenschaufel 120, 130 austritt. Der innere Hohlraum 46 ist von dem Nasenhohlraum 37 in radialer Richtung 121 durch eine Wand 49 abgegrenzt.
In der Wand 49 sind möglichst viele, möglichst kleine Prallkühlöffnungen 52 vorhanden.
Durch die Prallkühlöffnungen 52 strömt das Kühlmittel aus dem inneren Hohlraum 46 in den Nasenhohlraum 37, trifft dort auf die innere Wandfläche 53 der Anströmkante 13 auf und kühlt diese mittels Prallkühlung.
Auf der inneren Wandfläche 53, auf der das Kühlmittel auftrifft, ist beispielsweise zumindest eine, insbesondere viele kleine Erhebungen 55 angebracht, die der Verwirbelung des Kühlmediums dienen.

Das Kühlmittel (Luft und/oder Dampf), das durch die Prallkühlöffnungen 52 in den Nasenhohlraum 37 strömt, strömt ggf. zusammen mit dem Kühlmittel, das durch den ersten Kühlmitteleingangsbereich 22 eingeströmt ist, durch die zumindest eine Verbindungsöffnung 41 in die Kronentasche 43 und/oder durch die erste Austrittsöffnung 40 nach außen.
Der erste Kühlmitteleingangsbereich 22 kann auch vollständig verschlossen sein, so dass Kühlmittel nur aus dem inneren Hohlraum 46 in den Nasenhohlraum 37 eindringt.

Ein Quersteg 58 trennt den inneren Hohlraum 46 in axialer Richtung 34 von der Kronentasche 43.
Ebenso kann durch zumindest eine, insbesondere zwei oder mehrere zweite Austrittsöffnungen 56 in dem Quersteg 58 Kühlmittel aus dem mäanderförmigen Bereich 46 in die Nasentasche 43 eindringen (beispielsweise auch als Prallkühlung).

Der Quersteg 58 verläuft wie in Figur 2 unter einem bestimmten Winkel zur axialen Richtung 34, da sich die Kronentasche 43 in axialer Richtung 34 verbreitert.

Durch die Lage und/oder die Dicke des Querstegs 58 kann die dritte Eigenform einer Schaufelschwingung zu höheren Frequenzen verschoben werden. Spannungen an der dem Befestigungsbereich nahen Hinterkante 88 lassen sich durch Bohrungen (nicht dargestellt) in dem dritten Kühlmitteleingangsbereich 28 leicht beeinflussen.

Bei der Turbinenschaufel 120, 130 wird zumindest im Bereich der Anströmkante 13 keine Filmkühlung verwendet, da sie durch die Anordnung von Nasenhohlraum 37, Kronentasche 43 und innerer Hohlraum 46 im Inneren erfindungsgemäss stark verbessert gekühlt wird. Im Bereich der Abströmkante 10 kann eine Filmkühlung eingesetzt werden, muss aber nicht, so dass durch die Erfindung Kühlluft eingespart wird und der Wirkungsgrad der Turbine erhöht wird.

Durch die zweiten Austrittsöffnungen 56 im Quersteg 58 kann auch der Quersteg 58 zusätzlich gekühlt werden.

Sowohl in der Kronentasche 43 als auch im Bereich der Abströmkante 10 sind Stege 61 vorhanden, die im Innern zwischen den zwei Seiten des Schaufelblatts 406 verlaufen. Die Stege 61 dienen zur Verwirbelung des strömenden Kühlmittels.
In der Kronentasche 43 sind die Stege 61 beispielsweise gleichmäßig verteilt.
Im Bereich der Anströmkante 10 verlaufen beispielsweise zwei gegeneinander versetzte Reihen von Stegen 61 in radialer Richtung 121. Dies ermöglicht auch eine Verteilung des Kühlmittels, das aus einem Mäanderende 79 ausströmt, über die Länge Abströmkante 10.
Der Ausströmbereich 82 der Turbinenschaufel 120 ,130 im Bereich der Abströmkante 10 setzt sich zusammen aus dem Ausströmbereich 73 des inneren Hohlraums 46 und des Ausströmbereich 85 der Kronentasche 43.

Durch den dritten Kühlmitteleingangsbereich 28 strömt, wenn eine Abdeckung 91 fehlt oder geeignete Durchgangslöcher aufweist, beispielsweise das Kühlmittel in einen Fußhohlraum 76 (erstreckt sich beispielsweise bis zur Schaufelplattform 403, also im Schaufelfuß 400) und durch eine dritte Austrittsöffnung 64 in den Ausströmbereich 73 des inneren Hohlraums 46 im Bereich der Abschirmkante 10.
Ebenso kann das Kühlmittel, das über den dritten Kühlmitteleingangsbereich 28 einströmt, durch eine vierte Austrittsöffnung 67 direkt im Bereich der Abströmkante 10 wieder herausströmen.
Sowohl im Bereich des Abströmbereichs 73 als auch im Bereich der Abströmkante 10 der Kronentasche 43 können längliche Stege 70 (anstatt kreisförmige Stege 61) vorhanden sein. Länglich bedeutet, dass sie sich im radialen Querschnitt in axialer Richtung 34 erstrecken.

Der gesamte Hohlraum der Turbinenschaufel 120, 130 ist hier beispielsweise durch den Nasenhohlraum 37, die Kronentasche 43, den inneren Hohlraum 46 und den Fußhohlraum 76 gebildet.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.
Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 (Fig. 2) sind dabei an einem Innengehäuse 138 eines Stators 143 befestigt, wohingegen die Laufschaufeln 120 (Fig. 2) einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt.
Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, werden diese mittels eines Kühlmittels gekühlt (siehe Figur 2). Ebenso können die Substrate eine gerichtete Struktur aufweisen, d.h. sie sind einkristallin (SX-Struktur) oder weisen nur längsgerichtete Körner auf (DS-Struktur).
Als Material werden eisen-, nickel- oder kobaltbasierte Superlegierungen verwendet.
Beispielsweise werden Superlegierungen verwendet, wie sie aus der EP 1204776, EP 1306454, EP 1319729, WO 99/67435 oder WO 00/44949 bekannt sind; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X steht für Yttrium (Y) und/oder zumindest ein Element der Seltenen Erden) und Wärme durch eine Wärmedämmschicht aufweisen.
Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Turbinenschaufel (120, 130),
insbesondere einer Gasturbine (100),
die einen Nasenhohlraum (37) im Bereich einer Anströmkante (13) der Turbinenschaufel (120, 130) aufweist,
wobei die Anströmkante (13) durch Prallkühlung gekühlt ist,
die (1) eine Kronentasche als Hohlraum (43) im Bereich einer Schaufelspitze (19) der Turbinenschaufel (120, 130) aufweist,
die (43) mit dem Nasenhohlraum (37) verbunden ist, **dadurch gekennzeichnet, dass** sich die radiale Ausdehnung der Kronentasche (43) in axialer Richtung verbreitert.

2. Turbinenschaufel nach Anspruch 1,
**dadurch gekennzeichnet, dass**
die Turbinenschaufel (120, 130) einen inneren Hohlraum (46) aufweist,
der zumindest teilweise mäanderförmig ausgebildet ist,

3. Turbinenschaufel nach Anspruch 1 oder 2,
**dadurch gekennzeichnet, dass**
der Nasenhohlraum (37) einen ersten Kühlmitteleingangsbereich (22) in einem Schaufelfuß (400) aufweist,
durch den ein Kühlmittel in den Nasenhohlraum (37) einströmen kann.

4. Turbinenschaufel nach Anspruch 2,
**dadurch gekennzeichnet, dass**
der innere Hohlraum (46) einen zweiten Kühlmitteleingangsbereich (25) in einem Schaufelfuß (400) aufweist, durch den ein Kühlmittel in den inneren Hohlraum (46) einströmen kann.

5. Turbinenschaufel nach Anspruch 2, 3 oder 4,
**dadurch gekennzeichnet, dass**
der innere Hohlraum (46) und der Nasenhohlraum (37) durch eine Wand (49) voneinander getrennt sind,
die Prallkühlöffnungen (52) für die Kühlung der Anströmkante (13) aufweist.

6. Turbinenschaufel nach Anspruch 5,
**dadurch gekennzeichnet, dass**
die Wandfläche (53) in dem Nasenhohlraum (37),
auf die ein Kühlmittel nach Durchtritt der Prallkühlöffnungen (52) auftrifft,
zumindest eine Erhebung (55) aufweist.

7. Turbinenschaufel nach Anspruch 1,
**dadurch gekennzeichnet, dass**
zumindest eine erste Austrittsöffnung (40) im Bereich der Schaufelspitze (19),
insbesondere in der Nähe der Anströmkante (13) vorhanden ist,
aus der ein Kühlmittel aus dem Nasenhohlraum (37) nach außen austreten kann.

8. Turbinenschaufel nach Anspruch 1,
**dadurch gekennzeichnet, dass**
der Nasenhohlraum (37) durch zumindest eine Verbindungsöffnung (41) mit der Kronentasche (43) verbunden ist, durch die ein Kühlmittel strömen kann.

9. Turbinenschaufel nach Anspruch 2,
**dadurch gekennzeichnet, dass**
die Kronentasche (43) und der innere Hohlraum (46) durch einen Quersteg (58) getrennt sind,
in dem zumindest eine zweite Austrittsöffnung (56) vorhanden ist,
durch die ein Kühlmittel strömen kann.

10. Turbinenschaufel nach Anspruch 9,
**dadurch gekennzeichnet, dass**
durch die Lage und Dicke des Querstegs (46) eine Eigenform einer Schaufelschwingung der Turbinenschaufel (120, 130) einstellbar ist.

## Claims

1. Turbine blade (120, 130), in particular of a gas turbine (100), which has a nose cavity (37) in the region of a trailing edge (13) of the turbine blade (120, 130), the trailing edge (13) being cooled by impingement cooling, and which has a crown pocket as cavity (43) in the region of a blade tip (19) of the turbine blade (120, 130), which crown pocket (43) is connected to the nose cavity (37), **characterized in that** the radial extent of the crown pocket (43) widens in axial direction.

2. Turbine blade according to claim 1, **characterized in that** the turbine blade (120, 130) has an inner cavity (46) which is at least partly of meander-shaped design.

3. Turbine blade according to claim 1 or 2, **characterized in that** the nose cavity (37) has a first coolant inlet region (22) in a blade root (400), through which a coolant can flow into the nose cavity (37).

4. Turbine blade according to claim 2, **characterized in that** the inner cavity (46) has a second coolant inlet region (25) in a blade root (400), through which a coolant can flow into the inner cavity (46).

5. Turbine blade according to claim 2, 3 or 4, **characterized in that** the inner cavity (46) and the nose cavity (37) are separated from one another by a wall (49) which has impingement cooling openings (52) for cooling the leading edge (13).

6. Turbine blade according to claim 5, **characterized in that** the wall surface (53) in the nose cavity (37), which wall surface (53) is struck by a coolant after the latter has passed through the impingement cooling openings (52), has at least one prominence (55).

7. Turbine blade according to claim 1, **characterized in that** there is at least one first outlet opening (40) in the region of the blade tip (19), in particular in the vicinity of the leading edge (13), from which outlet opening (40) a coolant can discharge outward from the nose cavity (37).

8. Turbine blade according to claim 1, **characterized in that** the nose cavity (37) is connected to the crown pocket (43) by at least one connecting opening (41), through which a coolant can flow.

9. Turbine blade according to claim 2, **characterized in that** the crown pocket (43) and the inner cavity (46) are separated by a transverse web (58), in which there is at least one second outlet opening (56), through which a coolant can flow.

10. Turbine blade according to claim 9, **characterized in that** a natural mode of a blade vibration of the turbine blade (120, 130) can be set by the position and thickness of the transverse web (46).

## Revendications

1. Aube (120, 130) de turbine,
notamment d'une turbine (100) à gaz, qui a une cavité (37) en bec dans la partie d'un bord (13) d'attaque de l'aube (120, 130) de turbine,
le bord (13) d'attaque étant refroidi par refroidissement par percussion,
qui (1) a une poche en couronne comme cavité (43) dans la partie d'une pointe (19) de l'aube (120, 130) de turbine,
cavité (43) qui communique avec la cavité (37) en bec,
**caractérisée en ce que**
l'étendue radiale de la poche (43) en couronne s'élargit dans la direction axiale.

2. Aube de turbine suivant la revendication 1,
**caractérisée en ce que**
l'aube (120, 130) de turbine a une cavité (46) intérieure,
qui est sinueuse au moins en partie.

3. Aube de turbine suivant la revendication 1 ou 2,
**caractérisée en ce que**
la cavité (37) en bec a une première partie (22) d'entrée de fluide de refroidissement dans une emplanture (400) de l'aube, par laquelle un fluide de refroidissement peut entrer dans la cavité (37) en bec.

4. Aube de turbine suivant la revendication 2,
**caractérisée en ce que**
la cavité (46) intérieure a une deuxième partie (25) d'entrée de fluide de refroidissement dans une emplanture (400) de l'aube, par laquelle un fluide de refroidissement peut entrer dans la cavité (46) intérieure.

5. Aube de turbine suivant la revendication 2, 3 ou 4,
**caractérisée en ce que**
la cavité (46) intérieure et la cavité (37) en bec sont séparées l'une de l'autre par une paroi (49),
qui a des ouvertures (52) de refroidissement par percussion pour le refroidissement du bord (13) d'attaque.

6. Aube de turbine suivant la revendication 5,
**caractérisée en ce que**
la surface (53) de paroi a, dans la cavité (37) en bec sur laquelle arrive un fluide de refroidissement après avoir passé dans les ouvertures (52) de refroidissement par percussion, au moins une proéminence (55).

7. Aube de turbine suivant la revendication 1,
**caractérisée en ce que**
il y a au moins une première ouverture (40) de sortie dans la partie de la pointe (19) de l'aube,
notamment à proximité du bord (13) d'attaque,
de laquelle un agent de refroidissement peut sortir de la cavité (37) en bec vers l'extérieur.

8. Aube de turbine suivant la revendication 1,
**caractérisée en ce que**
la cavité (37) en bec communique par au moins une ouverture (41) de communication avec la poche (43) en couronne par laquelle un fluide de refroidissement peut s'écouler.

9. Aube de turbine suivant la revendication 2,
**caractérisée en ce que**
la poche (43) en couronne et la cavité (46) intérieure sont séparées par une traverse (58),
dans laquelle il est prévu au moins une deuxième ouverture (56) de sortie,
par laquelle un fluide de refroidissement peut s'écouler.

10. Aube de turbine suivant la revendication 9,
**caractérisée en ce que**
une forme propre d'une oscillation de l'aube (120, 130) de turbine peut être réglée par la position et par l'épaisseur de la traverse (46).
